# EUROPEAN PATENT APPLICATION

(11) **EP 4 317 927 A1**
(43) Date of publication of application: **07.02.2024**
(21) Application number: 22774623.7
(22) Date of filing: 24.01.2022
(51) Int. Cl.: G01L 3/10

(54) **TORQUE SENSOR**

(30) Priority: 22.03.2021 JP 2021047300
(71) Applicant: Nidec Copal Electronics Corporation, Shinjuku-ku Tokyo 160-0023 (JP)
(72) Inventor: ENDO, Takayuki, Sano-shi, Tochigi 327-0104 (JP)
(74) Representative: Meissner Bolte Partnerschaft mbB
(86) International application number: PCT/JP2022/002375
(87) International publication number: WO 2022/201821

(57) **Abstract**

A torque sensor is disclosed that reduce stress to be imposed on a part of a strain body at which electrodes are arranged and preventing poor connection and disconnection from occurring. First structure 11 and second structure 12 are connected by a plurality of third structures 13. First strain sensor 14 and second strain sensor 15 are fixed between the first structure and second structure. Each of the first strain sensor and second strain sensor includes a rectangular strain body 14a. The strain body 14a includes a first end fixed to the first structure, an intermediate part fixed to the second structure, and a second end. The second structure includes a contact part 12b, the contact part 12b coming into contact with a part between the intermediate part and the second end of the strain body.

## Description

### Technical Field

Embodiments of the present invention relate to a torque sensor to be provided on, for example, a joint of a robot arm.

### Background Art

In a torque sensor, a first structure and second structure are connected to each other by a plurality of third structures, and torque is detected by thin-film strain sensors provided between the first structure and second structure (see, for example, Patent Literature 1) .

In general, a thin-film strain sensor includes an insulating film formed on a strain body, thin-film resistive elements and thin-film electrodes formed on the insulating film, and detects a deformation of the strain body occurring according to the force applied to the strain body as a change in the resistance value of the thin-film resistive element (see, for example, Patent Literature 2).

### Citation List

### Patent Literatures

Patent Literature 1: JP 2018-91813 A
Patent Literature 2: JP 2018-132312 A

### Summary of Invention

### Technical Problem

The strain body of the thin-film strain sensor is fixed to the first structure and second structure. When torque is applied to a part between the first structure and second structure, the first structure and second structure are moved relatively to each other, and the torque is detected by a plurality of thin-film resistive elements arranged at a part of the strain body between the first structure and second structure. When the force to fix the strain body to the first structure and second structure or stiffness of the strain body is sufficiently large, even if the first structure and second structure are moved relatively to each other, the torque exerts no influence on a part of the strain body where the electrodes are arranged thereon, and being other than the part positioned between the first structure and second structure.

However, when the fixing force or stiffness is not sufficiently large, minute stress (strain) is caused at the part of the strain body at which the electrodes are arranged by friction between the strain body and first structure or second structure. For this reason, there is sometimes a case where electrical connection becomes unstable or disconnection occurs in the electrodes.

Embodiments described herein aim to provide a torque sensor capable of reducing stress to be imposed on a part of a strain body at which electrodes are arranged and preventing poor connection and disconnection from occurring.

### Solution to Problem

A torque sensor of the present embodiment comprises a first structure; a second structure arranged inside the first structure concentrically with the first structure; a plurality of third structures connecting the first structure and the second structure to each other; a first strain sensor and a second strain sensor fixed at positions other than the third structures between the first structure and the second structure, wherein each of the first strain sensor and the second strain sensor includes a rectangular strain body including a first end, a second end, and an intermediate part between the first end and the second end, wherein the first end is fixed to a surface of the first structure, the intermediate part is fixed to a surface of the second structure, and the second end is positioned at the surface of the second structure, thin-film resistive elements provided on a surface of the strain body between the first end and the intermediate part, and thin-film electrodes provided on the surface of the strain body positioned between the second end and the intermediate part of the strain body and electrically connected to the thin-film resistive elements, and the torque sensor further comprises a contact part provided on one of the second structure and the strain body, and coming into contact with a part between the intermediate part of the strain body and the second end or a contact part coming into contact with a part of the second structure.

### Brief Description of Drawings

FIG. 1 is a plan view showing a torque sensor according to a first embodiment.
FIG. 2 is a plan view showing an example of a strain sensor to be applied to the first embodiment.
FIG. 3 is a perspective view showing a part of FIG. 1 indicated by A in an enlarged form.
FIG. 4 is a perspective view showing a cross section along line IV-IV of FIG. 3.
FIG. 5 is a view schematically showing an operation of the first embodiment.
FIG. 6 is a perspective view showing a major part of a torque sensor according to a second embodiment.
FIG. 7 is a perspective view showing a cross section along line VII-VII of FIG. 6.
FIG. 8 is a perspective view showing a major part of a torque sensor according to a third embodiment.
FIG. 9 is a perspective view showing a cross section along line IX-IX of FIG. 8.
FIG. 10 is a perspective view showing a major part of a torque sensor according to a fourth embodiment.
FIG. 11 is a perspective view showing a cross section along line XI-XI of FIG. 10.
FIG. 12 is a perspective view showing a major part of a torque sensor according to a fifth embodiment.
FIG. 13 is a perspective view showing a cross section along line XIII-XIII of FIG. 12.
FIG. 14 is a perspective view showing a major part of a torque sensor according to a sixth embodiment.
FIG. 15 is a perspective view showing a cross section along line XV-XV of FIG. 14.
FIG. 16 is a perspective view showing a major part of a torque sensor according to a seventh embodiment.
FIG. 17 is a perspective view showing a cross section along line XVII-XVII of FIG. 16.

Mode for Carrying Out the Invention Embodiments of the present invention will be described below with reference to the accompanying drawings. Elements like or similar to those disclosed in the above embodiments are denoted by similar reference numerals.

### (First Embodiment)

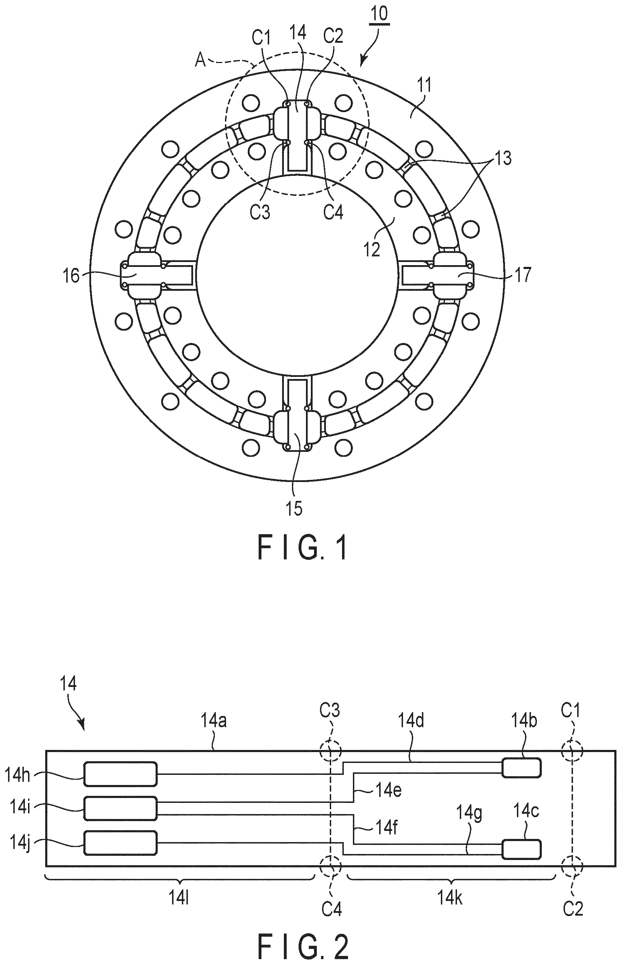

FIG. 1 shows a torque sensor 10 according to a first embodiment.

The torque sensor 10 includes a first structure 11, second structure 12, a plurality of third structures 13 functioning as beams, first strain sensor 14, second strain sensor 15, third strain sensor 16, and fourth strain sensor 17.

Inside the annular first structure 11, the annular second structure 12 is concentrically arranged and first structure 11 and second structure 12 are connected to each other by the radially arranged plurality of third structures 13. The first structure 11 receives, for example, torque and second structure 12 outputs, for example, torque.

Although the first structure 11, second structure 12, and plurality of third structures 13 are constituted of, for example, a metal, when mechanical strength can sufficiently be obtained against the applied torque, it is also possible to use materials other than the metal.

Between the first structure 11 and second structure 12, the first strain sensor 14, second strain sensor 15, third strain sensor 16, and fourth strain sensor 17 are coupled. These sensors are each arranged 90° apart from each other. The number of the strain sensors is not limited to four and may be, for example, two or three. The configurations of the first strain sensor 14, second strain sensor 15, third strain sensor 16, and fourth strain sensor 17 are identical to each other, and hence only the configuration of the first strain sensor 14 will be described.

FIG. 2 shows the first strain sensor 14 in an enlarged form.

The first strain sensor 14 includes a strain body 14a, thin-film resistive elements 14b and 14c, a plurality of thin-film wiring members 14d, 14e, 14f, and 14g, and thin-film electrodes 14h, 14i, and 14j.

The strain body 14a is constituted of, for example, a rectangular elastic body (metal), for example, stainless steel (SUS). The shape and material of the strain body 14a are not limited to the above and it is sufficient if the material is a weldable or brazeable material to be described later such as ceramics (for example, zirconia having a coefficient of linear expansion approximate to that of SUS) or the like.

The strain body 14a includes thin-film resistive elements 14b and 14c, thin-film wiring members 14d, 14e, and 14f, thin-film electrodes 14h, 14i, and 14j, first fixing parts C1 and C2, second fixing parts C3 and C4, transmitting part 14k, and electrode arrangement area 141. The number of the thin-film resistive elements is not limited to two and may be, for example, four. The number of the thin-film resistive elements and number of the strain sensors can be changed according to the configuration of a bridge circuit constituted of the resistive elements.

The first fixing parts C1 and C2 are provided at a first end of the strain body 14a in the longitudinal direction and at both ends of the strain body 14a in the transverse direction. The second fixing parts C3 and C4 are provided at an approximately intermediate part of the strain body 14a in the longitudinal direction and at both ends of the strain body 14a in the transverse direction.

The transmitting part 14k is provided between each of the first fixing parts C1 and C2 and each of the second fixing parts C3 and C4, and electrode arrangement area 141 is provided between a second end of the strain body 14a in the longitudinal direction and each of the second fixing parts C3 and C4.

The first fixing parts C1 and C2 are parts fixed to the first structure 11 and configured to transmit force between the first structure 11 and strain body 14a. The second fixing parts C3 and C4 are parts fixed to the second structure 12 of the torque sensor and configured to transmit force between the second structure 12 and strain body 14a.

The method for fixing the first fixing parts C1 and C2, and first structure 11 to each other and method for fixing the second fixing parts C3 and C4, and second structure 12 to each other are, for example, welding or brazing.

Circular marks shown in FIG. 1 and FIG. 2 as the first fixing parts C1 and C2 and second fixing parts C3 and C4 indicate the junction positions (junction areas). In FIG. 2, broken lines (straight lines) each connecting between the two circular marks expediently indicate the range of the transmitting part 14k.

The transmitting part 14k is a part configured to transmit force between each of the first fixing parts C1 and C2, and each of the second fixing parts C3 and C4, and transmitting part 14k is an area to be deformed according to the force received from the first structure 11 and second structure 12.

Each of the thin-film resistive elements 14b and 14c is arranged inside the transmitting part 14k and in the vicinity of each of the first fixing parts C1 and C2, and converts the deformation of the transmitting part 14k into an electrical signal.

The thin-film electrodes 14h, 14i, and 14j are arranged in the electrode arrangement area 14l other than the first fixing parts C1 and C2, second fixing parts C3 and C4, and transmitting part 14k and in the vicinity of the other end of strain body 14a.

The thin-film electrodes 14h and 14i are connected to the thin-film resistive element 14b by the thin-film wiring members 14d and 14e, and thin-film electrodes 14i and 14j are connected to the thin-film resistive element 14c by the thin-film wiring members 14f and 14g. The thin-film electrode 14i is a common electrode for the thin-film resistive elements 14b and 14c.

It should be noted that the number of the thin-film resistive elements, number of the thin-film electrodes, and number of the wiring members connecting between the thin-film resistive elements and thin-film electrodes are not limited to the above and can be modified.

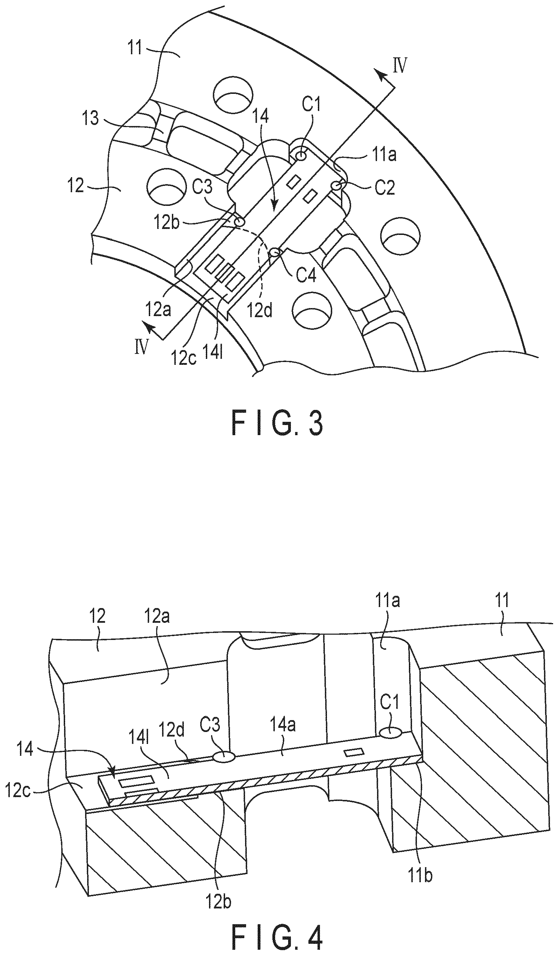

Each of FIG. 3 and FIG. 4 shows the part A of FIG. 1 in an enlarged form.

The first structure 11 includes a first concave part 11a configured to accommodate therein the strain body 14a and second structure 12 includes a second concave part 12a configured to accommodate therein the strain body 14a. The first concave part 11a includes a first bottom face 11b and second concave part 12a includes a second bottom face 12b having the same height as the first bottom face 11b. The first concave part 11a and second concave part 12a are not essential configurations and can also be omitted.

The strain body 14a is joined to the first bottom face 11b of the first structure at the first fixing parts C1 and C2 and is joined to the second bottom face 12b of the second structure at the second fixing part C3 and C4.

The second concave part 12a of the second structure 12 includes a third bottom face 12c and step part 12d. The third bottom face 12c is further lower than the second bottom face 12b and corresponds to the electrode arrangement area 14l of the strain body 14a. The step part 12d is positioned between the second bottom face 12b functioning as a contact part in contact with the strain body 14a and third bottom face 12c and this position is close to the second fixing parts C3 and C4.

There is a gap between the underside of the strain body 14a and third bottom face 12c, and the underside of the electrode arrangement area 14l of the strain body 14a is separate from the third bottom face 12c. The gap is less than or equal to, for example, 0.05 mm. Accordingly, no frictional force is caused between the underside of the electrode arrangement area 14l of the strain body 14a and third bottom face 12c.

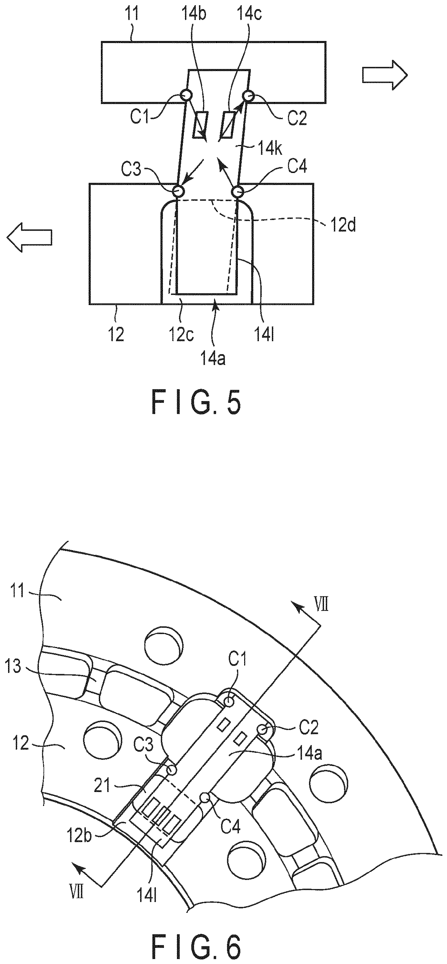

FIG. 5 is a view showing an operation of the first embodiment and shows a case where force is transmitted between the first structure 11 and second structure 12.

When the first structure 11 and second structure 12 are moved in directions opposite to each as indicated by arrows shown in FIG. 5 and the fixing force or stiffness of the first fixing parts C1 and C2 and second fixing parts C3 and C4 is sufficiently large, the transmitting part 14k of the strain body 14a is deformed and strain is detected by the thin-film resistive elements 14b and 14c. At this time, since there is a gap between the underside of the electrode arrangement area 14l of the strain body 14a and third bottom face 12c, no frictional force is caused between these portions and electrode arrangement area 14l receives no force from the second structure 12. For this reason, even when the fixing force or stiffness of the second fixing parts C3 and C4 is weak within the permissible range, the electrode arrangement area 14l is not deformed. Accordingly, no force from the second structure 12 is transmitted to the thin-film electrodes 14h, 14i, and 14j arranged in the electrode arrangement area 14l and wires bonded to the thin-film electrodes 14h, 14i, and 14j and thus these members can be prevented from being broken.

On the other hand, as in the conventional case, when the whole underside of the electrode arrangement area is in contact with the obverse side of the second structure 12, the electrode arrangement area 14l receives force from the second structure 12 due to the force of friction between the electrode arrangement area 14l and second structure 12. For this reason, when the fixing force or stiffness of the second fixing parts C3 and C4 is weak within the permissible range, the electrode arrangement area 14l is deformed as indicated in FIG. 5 by a broken line. Accordingly, the thin-film electrodes 14h, 14i, and 14j arranged in the electrode arrangement area 14l and wires boded to the thin-film electrodes 14h, 14i, and 14j receive force and there is a possibility of these members being broken.

It should be noted that the gap between the underside of the strain body 14 and third bottom face 12 is, for example, 0.05 mm or less and is extremely small. For this reason, when wires not shown are to be bonded to the thin-film electrodes 14h, 14i, and 14j, the strain body 14a is downwardly bent thereby enabling itself to abut on the third bottom face 12c. Accordingly, it is possible to join the wires to the thin-film electrodes 14h, 14i, and 14j with sufficient strength.

### (Advantageous Effects of First Embodiment)

According to the first embodiment described above, the second structure 12 includes the second bottom face 12b functioning as a contact part, strain body 14a is brought into contact with the second bottom face 12b between each of the second fixing parts C3 and C4 and step part 12d, and there is a gap between the underside of the electrode arrangement area 14l of the strain body 14a and third bottom face 12c. For this reason, when force is transmitted between the first structure 11 and second structure 12, the electrode arrangement area 14l of the strain body 14a receives no force from the second structure 12. Accordingly, even when the fixing force or stiffness of the second fixing parts C3 and C4 is weak within the permissible range, it is possible to prevent deformation of the electrode arrangement area 14l from occurring and prevent breakage of the thin-film electrodes 14h, 14i, and 14j arranged in the electrode arrangement area 14l from occurring.

### (Second Embodiment)

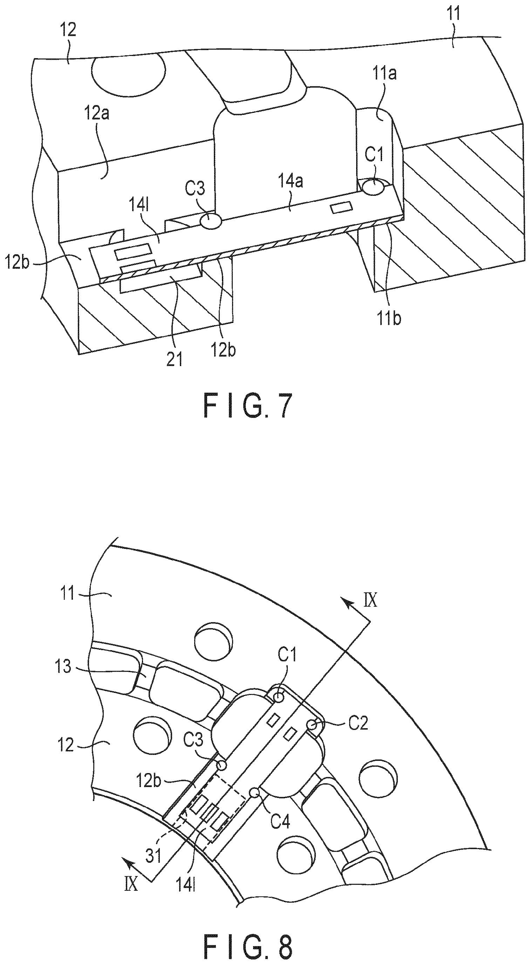

FIG. 6 and FIG. 7 each show a second embodiment. In the first embodiment, the second structure 12 includes the step part 12d functioning as a boundary between itself and the contact part, and electrode arrangement area 14l of the strain body 14a is separate from the third bottom face 12c of the second structure 12.

Conversely, in the second embodiment, the second structure 12 further includes a third concave part 21 inside the second concave part 12a, and part of the border part of the third concave part 21, i.e., two second bottom faces 12b positioned in the longitudinal direction of the strain body 14a function as the contact part.

More specifically, the third concave part 21 is arranged in such a manner as to correspond to the central part of the electrode arrangement area 14l of the strain body 14a in terms of a positional relationship. For this reason, the most part of the electrode arrangement area 14l is opposed to the third concave part 21 and is not in contact with the second bottom faces 12b, vicinities of the second fixing parts C3 and C4 of the strain body 14a are in contact with one of the two bottom faces 12b separated by the third concave part 21 into two, and second end of the strain body 14a is brought into contact with the other of the second bottom faces 12b separated into two.

In the configuration described above, when the first structure 11 and second structure 12 are moved in directions opposite to each other and fixing force or stiffness of the second fixing parts C3 and C4 is weak within the permissible range, in the strain body 14a, slight frictional force occurs at a part between each of the second fixing parts C3 and C4 and third concave part 21, and between the underside of the second end of the strain body 14a and second bottom face 12b. However, at the most part of the electrode arrangement area 14l, no friction occurs, and hence the most part of the electrode arrangement area 14l receives no force from the second structure and the electrode arrangement area 14l is hardly deformed. Accordingly, no force from the second structure 12 is transmitted to the thin-film electrodes 14h, 14i, and 14j arranged in the electrode arrangement area 14l and wires not shown bonded to the thin-film electrodes 14h, 14i, and 14j and it is possible to prevent breakage of these members from occurring.

Further, the second end of the strain body 14a is arranged on the second bottom face 12b, and hence when wires not shown are to be bonded to the thin-film electrode 14h, 14i, and 14j, it is possible to sufficiently retain the strain body 14a. Accordingly, it is possible to join the wires to the thin-film electrodes 14h, 14i, and 14j with sufficient strength.

### (Advantageous Effects of Second Embodiment)

By the second embodiment too, it is possible to obtain advantageous effects identical to the first embodiment. Moreover, according to the second embodiment, the second end of the strain body 14a is arranged on the second bottom face 12b of the second concave part 12a, and hence it is possible to stably retain the strain body 14a.

### (Third Embodiment)

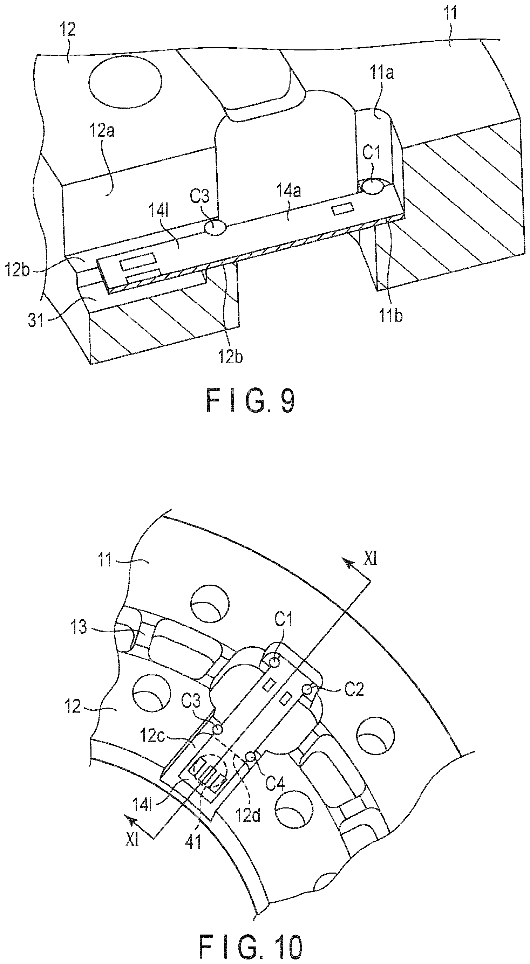

FIG. 8 and FIG. 9 each show a third embodiment. In the second embodiment, in the strain body 14a, the second end thereof is arranged on the second bottom face 12b of the second concave part 12a.

Conversely, in the third embodiment, the second structure 12 includes a groove 31 along the longitudinal direction of the strain body 14a, and both sides of the groove 31 function as a contact part to be in contact with the both sides of the strain body 14a in the longitudinal direction thereof.

More specifically, in the second bottom face of the second structure 12, the groove 31 is formed from the vicinities of the second fixing parts C3 and C4 along the radial direction of the second structure 12. The width of the groove 31 is less than the width of the strain body 14a. For this reason, the both sides of the strain body 14a along the longitudinal direction thereof are brought into contact with the second bottom face 12b on both sides of the groove 31, and most part of the strain body 14a is opposed to the groove 31 and is not in contact with the second bottom face 12b.

In the configuration described above, when the first structure 11 and second structure 12 are moved in directions opposite to each other and fixing force or stiffness of the second fixing parts C3 and C4 is weak within the permissible range, in the strain body 14a, slight frictional force occurs at a part between each of the second fixing parts C3 and C4 and groove 31, and between each of the undersides of the both sides of the strain body 14a and second bottom face 12b. However, at the most part of the electrode arrangement area 14l, no friction occurs, and hence the most part of the electrode arrangement area 14l receives no force from the second structure 12 and electrode arrangement area 14l is hardly deformed. Accordingly, no force from the second structure 12 is transmitted to the thin-film electrodes 14h, 14i, and 14j arranged in the electrode arrangement area 14l and wires bonded to the thin-film electrodes 14h, 14i, and 14j, and it is possible to prevent breakage of these members from occurring.

Further, the both sides of the strain body 14a are arranged on the second bottom face 12b, and hence, when wires not shown are to be bonded to the thin-film electrodes 14h, 14i, and 14j, it is possible to sufficiently retain the strain body 14a. Accordingly, it is possible to join the wires to the thin-film electrodes 14h, 14i, and 14j with sufficient strength.

### (Advantageous Effects of Third Embodiment)

By the third embodiment too, it is possible to obtain advantageous effects identical to the first embodiment. Moreover, according to the third embodiment, the both sides of the strain body 14a are each arranged on the second bottom face 12b, and hence it is possible to stably retain the strain body 14a.

### (Fourth Embodiment)

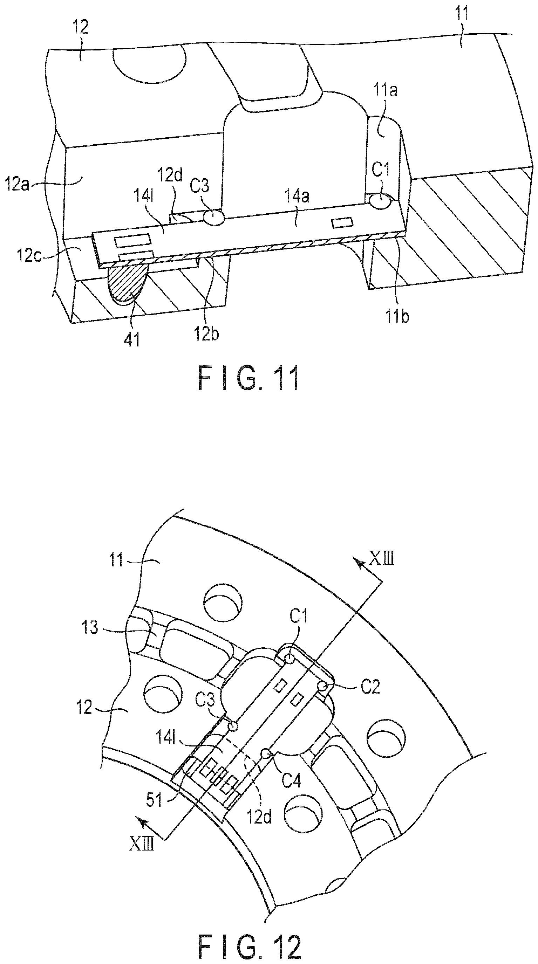

FIG. 10 and FIG. 11 each show a fourth embodiment. In the third embodiment, the both sides of the strain body 14a are arranged on the second bottom face 12b.

Conversely, the fourth embodiment is an embodiment formed by modifying the first embodiment, and includes a first protrusion 41 functioning as a contact part configured to come into point contact with the vicinity of the second end of the strain body 14a.

More specifically, the first protrusion 41 is provided on a third bottom face 12c formed by a step part 12d. Although the first protrusion 41 is, for example, a knock-pin, first protrusion 41 is not limited to this. A first end of the first protrusion 41 is inserted into the second structure 12 and surface of the second end thereof is shaped into, for example, a spherical form and is brought into point contact with the underside of the electrode arrangement area 14l of the strain body 14a. The position of point contact corresponds to, for example, the position in the electrode arrangement area 14l at which the thin-film electrode 14i is arranged.

In the configuration described above, when the first structure 11 and second structure 12 are moved in directions opposite to each other and fixing force or stiffness of the second fixing parts C3 and C4 is weak within the permissible range, in the strain body 14a, slight frictional force occurs at a part between each of the second fixing parts C3 and C4 and step part 12d, and between the underside of the strain body 14a and first protrusion 41 in contact with the underside of the strain body 14a. However, at the most part of the electrode arrangement area 14l, no friction occurs, and hence the most part of the electrode arrangement area 14l receives no force from the second structure 12, and electrode arrangement area 14l is hardly deformed. Accordingly, no force from the second structure 12 is transmitted to the thin-film electrodes 14h, 14i, and 14j arranged in the electrode arrangement area 14l and wires bonded to the thin-film electrodes 14h, 14i, and 14j, and it is possible to prevent breakage of these members from occurring.

Further, the strain body 14a is supported on the first protrusion 41, and hence when wires not shown are to be boded to the thin-film electrodes 14h, 14i, and 14j, it is possible to sufficiently retain the strain body 14a. Accordingly, it is possible to join the wires to the thin-film electrodes 14h, 14i, and 14j with sufficient strength.

### (Advantageous Effects of Fourth Embodiment)

By the fourth embodiment too, it is possible to obtain advantageous effects identical to the first embodiment. Moreover, according to the fourth embodiment, the strain body 14a is supported on the first protrusion 41, and hence it is possible to stably retain the strain body 14a.

### (Fifth Embodiment)

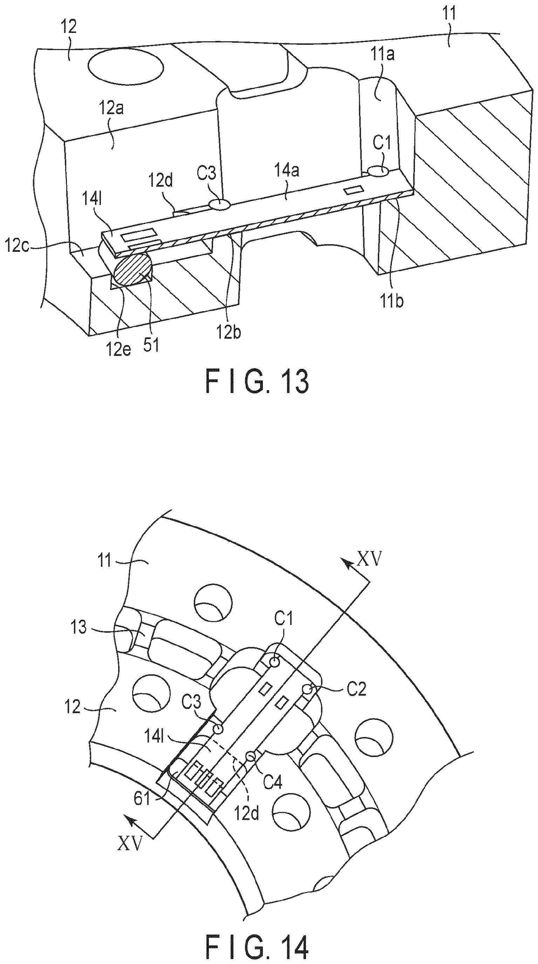

FIG. 12 and FIG. 13 each show a fifth embodiment. In the fourth embodiment, the underside of the strain body 14a is brought into point contact with the first protrusion 41.

Conversely, the fifth embodiment includes a second protrusion 51 functioning as a contact part configured to come into line contact with the vicinity of the second end of the strain body 14a.

More specifically, the second protrusion 51 is, for example, a column. In the third bottom face 12c formed by the step part 12d of the second structure 12, a groove 12e is provided in a direction intersecting the longitudinal direction of the strain body 14a. The second protrusion 51 is accommodated in the groove 12e in such a direction that the axis of the column intersects the longitudinal direction of the strain body 14a. The depth of the groove 12e is approximately equal to the radius of the column, approximately half the columnar second protrusion 51 is protruded from the groove 12e and is brought into line contact with the underside of the electrode arrangement area 14l of the strain body 14a. The position of line contact is set along, for example, the line position at which the thin-film electrodes 14h, 14i, and 14j of the electrode arrangement area 14l are arranged.

In the configuration described above, when the first structure 11 and second structure 12 are moved in directions opposite to each other and fixing force or stiffness of the second fixing parts C3 and C4 is weak within the permissible range, in the strain body 14a, slight frictional force occurs at a part between each of the second fixing parts C3 and C4 and step part 12d and between the underside of the strain body 14a and second protrusion 51 in line contact with the underside of the strain body 14a. However, at the most part of the electrode arrangement area 14l, no friction occurs, and hence the most part of the electrode arrangement area 14l receives no force from the second structure 12, and electrode arrangement area 14l is hardly deformed. Accordingly, no force from the second structure 12 is transmitted to the thin-film electrodes 14h, 14i, and 14j arranged in the electrode arrangement area 14l and wires bonded to the thin-film electrodes 14h, 14i, and 14j, and it is possible to prevent breakage of these members from occurring.

Further, the strain body 14a is supported on the second protrusion 51, and hence when wires not shown are to be bonded to the thin-film electrodes 14h, 14i, and 14j, it is possible to sufficiently retain the strain body 14a. Accordingly, it is possible to join the wires to the thin-film electrodes 14h, 14i, and 14j with sufficient strength.

### (Advantageous Effects of Fifth Embodiment)

By the fifth embodiment too, it is possible to obtain advantageous effects identical to the first embodiment. Moreover, according to the fifth embodiment, the strain body 14a is supported on the second protrusion 51 in line contact with the strain body 14a, and hence it is possible to more stably retain the strain body 14a.

### (Sixth Embodiment)

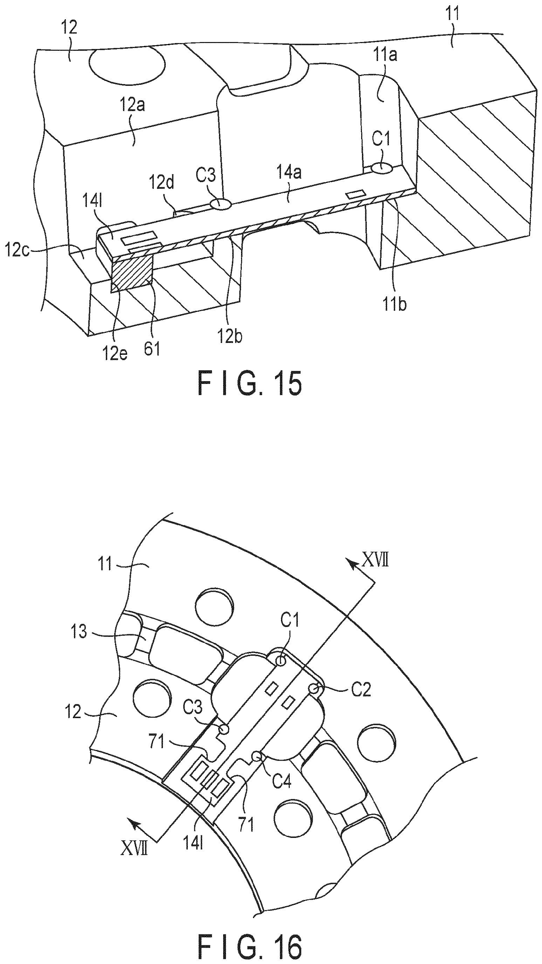

FIG. 14 and FIG. 15 each show a sixth embodiment. In the fifth embodiment, the shape of the second protrusion 51 is a column.

Conversely, the sixth embodiment includes a third protrusion 61 formed in the vicinity of the second end of the strain body 14a by using a material of a low coefficient of friction and functioning as a contact part. The shape of the third protrusion 61 is, for example, a quadrangular prism.

The third protrusion 61 having the shape of the quadrangular prism formed of the material of the low coefficient of friction is accommodated in the groove 12e in such a direction that the axis thereof intersects the longitudinal direction of the strain body 14a. The depth of the groove 12e is approximately half the length of one side of the quadrangular prism, approximately half the third protrusion 61 of the quadrangular prism protrudes from the groove 12e and is brought into surface contact with the underside of the electrode arrangement area 14l of the strain body 14a. The position of surface contact is set along, for example, the line position at which the thin-film electrodes 14h, 14i, and 14j of the electrode arrangement area 14l are arranged.

As the material of the low coefficient of friction, a resin such as fluorine resin (polytetrafluoroethylene (PTFE)), nylon resin (polyamide (PA)) or the like, or metal to which electroless nickel plating is applied, diamondlike carbon (DLC)-coated metal, and oil-impregnated sintered metal can be applied. The oil-impregnated sintered metal is a material formed by impregnating a porous sintered body constituted of a copper-based metal containing a graphite impalpable powder with oil.

In the configuration described above, when the first structure 11 and second structure 12 are moved in directions opposite to each other and fixing force or stiffness of the second fixing parts C3 and C4 is weak within the permissible range, slight frictional force occurs at a part between each of the second fixing parts C3 and C4 and groove 31 and between the underside of the strain body 14a and third protrusion 61 of the low coefficient of friction in surface contact with the underside of the strain body 14a. However, at the most part of the electrode arrangement area 14l, no friction occurs, and hence the most part of the electrode arrangement area 14l receives no force from the second structure 12, and electrode arrangement area 14l is hardly deformed. Accordingly, no force from the second structure 12 is transmitted to the thin-film electrodes 14h, 14i, and 14j arranged in the electrode arrangement area 14l and wires bonded to the thin-film electrodes 14h, 14i, and 14j, and it is possible to prevent breakage of these members from occurring.

Further, the strain body 14a is supported on the third protrusion 61 brought into surface contact with the underside of the electrode arrangement area 14l, and hence when wires not shown are to be bonded to the thin-film electrodes 14h, 14i, and 14j, it is possible to sufficiently retain the strain body 14a. Accordingly, it is possible to join the wires to the thin-film electrodes 14h, 14i, and 14j with sufficient strength.

### (Advantageous Effects of Sixth Embodiment)

By the sixth embodiment too, it is possible to obtain advantageous effects identical to the first embodiment. Moreover, according to the sixth embodiment, the strain body 14a is supported on the third protrusion 61 in surface contact with the strain body 14a, and hence it is possible to more stably retain the strain body 14a.

### (Seventh Embodiment)

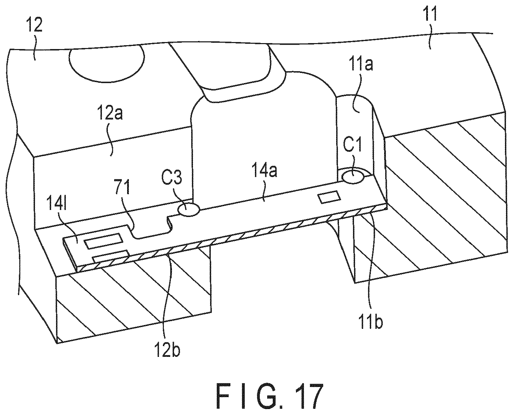

FIG. 16 and FIG. 17 each show a seventh embodiment. In each of the first to sixth embodiment described above, the configuration of the second structure 12 side is improved in order to reduce the force of friction between the strain body 14a and second structure 12.

Conversely, in the seventh embodiment, the configuration of the strain body 14a is improved in place of the second structure 12.

More specifically, the electrode arrangement area 14l of the strain body 14a is arranged in contact with the flat second bottom face 12b, and strain body 14a includes a constricted part 71 at a part of the electrode arrangement area 14l. The constricted part 71 is provided between, for example, the second fixing parts C3 and C4 and thin-film electrodes 14h, 14i, and 14j. The constricted part 71 includes an area less than the other part of the electrode arrangement area 14l. For this reason, the area of contact between the electrode arrangement area 14l and second bottom face 12b of the second structure 12 is reduced.

In the configuration described above, when the first structure 11 and second structure 12 are moved in directions opposite to each other, and fixing force or stiffness of the second fixing parts C3 and C4 is weak within the permissible range, slight frictional force occurs between the electrode arrangement area 14l of the strain body 14a and second bottom face 12b of the second structure. However, the frictional force is made less by the constricted part 71 as compared with the case where the constricted part 71 is not provided. Moreover, the width of the constricted part 71 is less than the other part of the electrode arrangement area 14l, and hence this part is made deformable. For this reason, the constricted part 71 is deformed by the frictional force, and deformation of the electrode arrangement area 14l is prevented from occurring. Accordingly, no force from the second structure 12 is transmitted to the thin-film electrodes 14h, 14i, and 14j arranged in the electrode arrangement area 14l and wires boded to the thin-film electrodes 14h, 14i, and 14j, and it is possible to prevent breakage of these members from occurring.

Further the electrode arrangement area 14l is supported on the second bottom face 12b, and hence when wires not shown are to be bonded to the thin-film electrodes 14h, 14i, and 14j, it is possible to sufficiently retain the electrode arrangement area 14l. Accordingly, it is possible to join the wires to the thin-film electrodes 14h, 14i, and 14j with sufficient strength.

### (Advantageous Effects of Seventh Embodiment)

By the seventh embodiment too, it is possible to obtain advantageous effects identical to the first embodiment. Moreover, according to the seventh embodiment, the constricted part 71 is deformed, whereby it is possible to prevent force from the second structure from being transmitted to the thin-film electrodes 14h, 14i, and 14j arranged in the electrode arrangement area 14l and wires bonded to the thin-film electrodes 14h, 14i, and 14j. Accordingly, it is possible to more securely prevent breakage of these members from occurring.

Apart from the above, the present invention is not limited to the embodiments described above but the constituent elements of the invention can be modified in various manners without departing from the spirit and scope of the invention. Various aspects of the invention can also be extracted from any appropriate combination of a plurality of constituent elements disclosed in the embodiments. Some constituent elements may be deleted in all of the constituent elements disclosed in the embodiments. The constituent elements described in different embodiments may be combined arbitrarily.

## Claims

1. A torque sensor **characterized by** comprising:
a first structure;
a second structure arranged inside the first structure concentrically with the first structure;
a plurality of third structures connecting the first structure and the second structure to each other;
a first strain sensor and a second strain sensor fixed at positions other than the third structures between the first structure and the second structure, wherein
each of the first strain sensor and the second strain sensor includes
a rectangular strain body including a first end, a second end, and an intermediate part between the first end and the second end, wherein the first end is fixed to a surface of the first structure, the intermediate part is fixed to a surface of the second structure, and the second end is positioned at the surface of the second structure,
thin-film resistive elements provided on a surface of the strain body between the first end and the intermediate part, and
thin-film electrodes provided on the surface of the strain body positioned between the second end and the intermediate part of the strain body and electrically connected to the thin-film resistive elements, and
the torque sensor further comprises
a contact part provided on one of the second structure and the strain body, and coming into contact with a part between the intermediate part of the strain body and the second end or a contact part coming into contact with a part of the second structure.

2. The torque sensor of claim 1, **characterized in that**
the second structure includes a step part as the contact part corresponding to a vicinity of the intermediate part of the strain body.

3. The torque sensor of claim 1, **characterized in that**
the second structure includes a concave part provided between the intermediate part of the strain body and the second end, wherein a border part of the concave part is the contact part.

4. The torque sensor of claim 1, **characterized in that**
the second structure includes a groove along a longitudinal direction of the strain body, and both sides of the groove along a longitudinal direction thereof function as the contact part which comes into contact with both sides of the strain body in a longitudinal direction thereof.

5. The torque sensor of claim 1, **characterized in that**
the second structure includes, at a position thereof corresponding to a vicinity of the second end of the strain body, a first protrusion which comes into point contact with the strain body and functions as the contact part.

6. The torque sensor of claim 1, **characterized in that**
the second structure includes, at a position thereof corresponding to the vicinity of the second end of the strain body, a second protrusion which comes into line contact with the strain body and functions as the contact part.

7. The torque sensor of claim 1, **characterized in that**
the second structure includes, at a position thereof corresponding to the vicinity of the second end of the strain body, a third protrusion which comes into contact with the strain body, is formed of a material of a low coefficient of friction, and functions as the contact part.

8. The torque sensor of claim 1, **characterized in that**
the intermediate part and the second end of the strain body are arranged in contact with a flat surface of the second structure, and the strain body includes, between the intermediate part and the thin-film electrodes, a constricted part.
